# FASCICULE DE BREVET EUROPEEN

(11) **EP 0 977 684 B1**
(45) Date de publication et mention de la délivrance du brevet: **11.07.2001**
(21) Numéro de dépôt: 98913497.8
(22) Date de dépôt: 21.04.1998
(51) Int. Cl.: B62K 21/12, B62K 21/26

(54) **GUIDON DE VELO AVEC ELEMENTS COMPOSITES**
FAHRRADLENKER MIT VERBUNDELEMENTEN
BICYCLE HANDLEBARS WITH COMPOSITE ELEMENTS

(30) Priorité: 25.04.1997 CH 96997
(43) Date de publication de la demande: 09.02.2000
(73) Titulaire: Bender, Georges, 1963 Vetroz (CH)
(72) Inventeur: Bender, Georges, 1963 Vetroz (CH)
(74) Mandataire: Haft, von Puttkamer, Berngruber, Czybulka
(86) Numéro de dépôt international: CH9800153
(87) Numéro de publication internationale: WO9849045

(56) Documents cités:
- WO-A-95/29090
- DE-A- 4 106 154
- FR-A- 2 476 557
- US-A- 4 245 522
- US-A- 4 445 396
- US-A- 5 205 185

## Description

La présente invention se rapporte à un guidon de vélo avec éléments composites, et plus particulièrement à un guidon de vélo de course qui est constitué par un ou plusieurs éléments qui sont réalisés en matières composites, les éléments du guidon présentant des formes particulières permettant de procurer plusieurs positions d'utilisation ergonomiques.

Les guidons de vélos de course présentent depuis des dizaines d'années des formes présentant une partie transversale droite qui est reliée à la potence et des poignées gauche et droite qui sont courbées, les poignées courbées supportant les commandes de freins. Selon toutes les formes d'exécutions connues de vélos de course, les poignées courbées sont disposées très en avant par rapport à la potence. Dans la pratique, le cycliste utilisant un vélo de course, utilise trois positions sur le guidon. Une position dans laquelle il pose ses mains sur la partie transversale, lors de montées par exemple, une position dans laquelle il met ses mains sur la partie avant des poignées coudées pour avoir accès aux commandes des freins, et une position dans laquelle il met ses mains sur la partie inférieure des poignées coudées lorsqu'il cherche à se mettre dans une position du corps présentant le minimum de résistance à l'air. Ces formes de guidons conventionnelles et connues depuis des dizaines d'années peuvent être utilisées sans problème par des cyclistes professionnels à la recherche des meilleures performances et à la recherche de présenter une surface frontale très limitée pour limiter la résistance à l'air. Par contre les positions procurées par les guidons conventionnels sont inconfortables pour les cyclistes amateurs, qui sont les acheteurs de vélos de course, qui peuvent avoir des problèmes de maux de dos ou des problèmes de respiration lorsqu'ils sont en position du haut du corps repliée et qui préfèrent se trouver avec un position du haut du corps plus haute pour des raisons de confort et de bonne respiration. Depuis quelques années, les problèmes de position avec les guidons conventionnels connus ont encore été accentués par la commercialisation des commandes des dérailleurs et des plateaux qui sont disposées avec les leviers de freins, ce qui implique que les utilisateurs doivent utiliser beaucoup plus souvent la position la plus avancée et couchée qui est la plus inconfortable. Avec les formes d'exécutions connues des guidons conventionnels, les cyclistes ont donc tendance, entre les freinages et les changements de vitesses, à utiliser le plus souvent une position avec les mains posées sur la barre transversale. Cette position préférée qui est dépendante de la conception des guidons conventionnels présente plusieurs inconvénients, et par conséquent la forme des guidons conventionnels présentent des inconvénients importants. Il est en effet connu que, pour des raisons physiques, un cycliste a une position plus confortable et plus résistante aux chocs provoqués par les irrégularités de la route, lorsque ses mains sont posées sur les côtés avec les poignets disposés dans le plan vertical, plutôt qu'avec les mains posées sur la barre transversale et les poignets disposés dans le plan horizontal. Les guidons de vélos de course conventionnels présentent l'inconvénient important de présenter une forme qui n'est plus adaptée par rapport aux développements des commandes de changements de vitesse qui sont montées avec les poignées de freins. Diverses formes d'exécution de vélos de course ont été envisagées pour procurer une meilleure position tout en utilisant des guidons conventionnels, mais ces formes d'exécutions présentent des inconvénients. En effet, la réduction de la longueur de la potence ou du cadre du vélo peuvent présenter des inconvénients importants sur la stabilité et la tenue de route. Dans la plupart des cas, la forme des guidons de vélo conventionnels est conditionnée par le fait que ces guidons sont réalisés avec des tubes d'aluminium pliés, ou autres matières métalliques, qui présentent des limitations au point de vue des rayons de pliage , c'est-à-dire qui ne permettent pas d'obtenir des rayons courts nécessaires pour obtenir une bonne ergonomie avec les nouveaux modes de commandes de vitesse disposés avec les poignées de freins. Des formes d'exécutions de guidon de vélos de course comportant des éléments composites sont connues, mais la forme de ces guidons ne permet pas de remédier aux inconvénients précités.

Des formes d'exécutions sont connues par les brevets FR 2476557 Al et US 4445396 A, mais ces formes d'exécutions présentent des inconvénients importants qui, comme déjà mentionné dans la portion précédente du descriptif, consistent par le fait que les deux poignées comportant les commandes de frein sont très en avant par rapport au point de fixation du guidon sur la potence ce qui implique une position du cycliste très couchée en avant, position qui est contraignante et qui peut provoquer des problèmes de dos si elle est utilisée en permanence. Cette position contraignante implique donc que lors d'un parcours, le cycliste amateur ne l'utilise que rarement ce qui implique que lors d'un parcours le cycliste amateur utilise la majorité du temps des positions plus en arrière, positions dans lesquelles il n'a pas directement accès aux commandes de freins. Comme déjà mentionné, le manque d'accès direct aux commandes de freins peut provoquer des situations dangereuses qui peuvent provoquer des accidents graves. Les formes d'exécutions connues par les deux brevets susmentionnés présentc encore l'inconvénient de présenter une barre transversale qui présente des formes avec des rayons longs aux endroits d'appui des mains, dans la position de montée par exemple. Le fait que la paume des mains soit en appui sur une portion courbée présente un inconfort qui peut se traduire par des crampes dans les mains.

Les buts de l'invention consistent donc à remédier aux inconvénients précités des formes d'exécution connues

Les buts sont atteints avec les principes de l'invention tels que définis par la revendication 1

Le guidon de vélo avec éléments composites, selon le principe de l'invention comporte une barre centrale qui est fixée à la potence du vélo dans sa partie centrale. Cette barre centrale peut être réalisée avec un tube d'aluminium, par exemple. Des poignées qui sont réalisées en matières composites moulées sont montées à chacune des extrémités de la barre centrale. Les poignées de frein et les commandes de vitesse sont montées sur les poignées. Les poignées peuvent être montées aux extrémités de la barre centrale lors du moulage, par exemple. En vue de dessus, la barre centrale est coudée de chaque côté à partir de la partie centrale, avec des coudes présentant une forme de S vers l'arrière. et comporte de chaque côté des portions transversales qui sont fortement décalées vers l'arrière, ces portions transversale constituant des appuis pour les mains lorsque le cycliste est en montée, par exemple. Les portions transversales sont droites ce qui permet d'obtenir un appui confortable pour la paume des mains. Des poignées réalisées en matière composite moulée sont montées à chacune des extrémités de la barre centrale. A partir de l'endroit de fixation de la poignée à la barre centrale, la poignée est coudée, dans le plan horizontal, selon un rayon court, à 90°, de manière à ce qu'elle soit disposée dans le sens longitudinal. La poignée est ensuite coudée vers le bas, dans le plan vertical, selon un rayon dans une première partie et comporte ensuite une portion droite qui présente un angle vers l'arrière et une petite portion coudée à son extrémité. La poignée de frein et la commande de vitesse sont montées dans la portion du rayon avant de la poignée. Les principes de l'invention présentent de nombreux avantages. Un avantage important est constitué par le fait que la forme du guidon permet de disposer en arrière les différentes parties d'appui des mains, ce qui permet de procurer au cycliste amateur une position beaucoup plus confortable, ceci sans avoir à modifier le cadre du vélo ou la potence. Cette position beaucoup mieux adaptée, permet au cycliste de rester la plupart du temps avec les mains sur les supports des poignées de frein et des commendes de vitesses, puisque les parties d'appui avant se trouvent en ligne par rapport au point de fixation du guidon sur la potence. Cette position favorisée par la conception et par la forme particulière des éléments du guidon présente un avantage important pour le confort du cycliste, mais elle présente également un avantage très important au point de vue de la sécurité. En effet, le cycliste étant dans une position confortable avec les mains sur les supports des poignées de frein, il peut rester pratiquement en permanence dans cette position lui permettant de freiner immédiatement, ce qui n'est pas le cas avec les guidons de vélos de course conventionnels avec lesquels il doit le plus souvent changer la position de ses mains pour freiner. La conception du guidon de vélo de course selon les principes de l'invention présente donc un avantage important dans la mesure où il permet, en favorisant une position des mains sur les supports de frein, de réduire le temps de réaction de freinage dans la plupart des cas, Les principes de l'invention présentent également un avantage important au point de vue comnmercial. En effet, beaucoup de cyclistes amateurs ont tendance à abandonner la pratique du vélo de course pour des raisons de maux physiques et d'inconfort. Le simple changement d'un guidon peu coûteux et facile à effectuer, peut procurer une importante augmentation des ventes.

Les dessins annexés illustrent schématiquement et à titre d'exemple le principes de l'invention.

La figure 1 est une vue d'ensemble du guidon de vélo.

La figure 2 est une vue de côté du guidon de vélo.

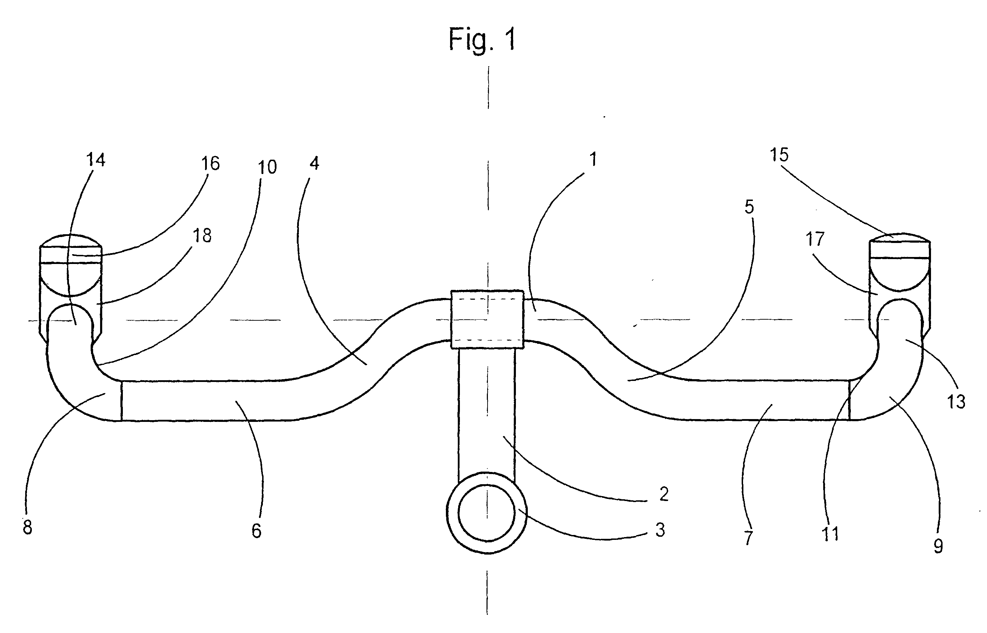

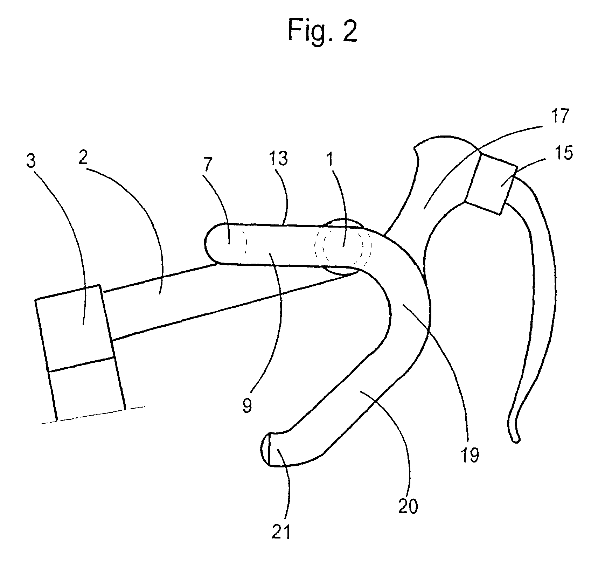

En référence aux figures 1 et 2, un guidon de vélo est constitué par une barre tranversale 1 qui est montée à l'extrémité d'une potence 2 qui est montée pivotante sur un cadre 3. Des poignées 8 et 9, qui sont réalisées en matière composite moulée sont montées à chaque extrémité de la barre transversale 1. La barre transversale 1 peut être réalisée avec un tube d'aluminium, par exemple. Les poignées 8 et 9 peuvent être fixées aux extrémités de la barre transversale par collage. par exemple. Elles peuvent également être intégrées à la barre transversale lors du moulage, par surmoulage. De chaque côté de sa partie centrale, la barre transversale 1 présente des parties coudées 4 et 5 qui présentent une forme de S vers l'arrière et des parties transversales 6 et 7 qui sont disposées en arrière par rapport à l'extrémité de la potence, les parties transversales 6 et 7 étant droites de manière à constituer des appuis confortables pour la paume des mains. Les poignées 8 et 9 comportent des parties coudées horizontales 10 et 11 qui présentent un rayon court disposant la partie avant des poignées 13 et 14 dans le sens longitudinal et vers l'avant. La partie avant des poignées présente une partie coudée verticale 19, cette partie coudée verticale étant coudée selon un rayon vers le bas, une partie droite 20 qui est disposée selon un angle vers l'arrière, et une partie coudée inférieure 21 qui constitue une butée empêchant les mains de glisser hors du guidon. Des commandes de freins et de vitesses 15 et 16 sont montées sur des supports de commandes 17 et 18 qui sont montées sur les poignées 8 et 9.

Le guidon de vélo, selon les principes de l'invention, permet de reculer tous les points d'appuis des mains sur le guidon, et de procurer plusieurs positions des mains. Le fait que les poignées réalisées en matière composite moulée permette de réaliser des rayons courts non réalisables avec des tubes est très important dans la mesure où cela permet d'obtenir des parties d'appuis droites de la barre transversale suffisantes pour l'appui des mains, ceci tout en ayant un guidon ayant une largeur conventionnelle.

## Revendications

1. Guidon de vélo avec éléments composites comportant des poignées (8, 9) qui sont montées aux extrémités d'une barre transversale (1) qui est montée à l'extrémité d'une potence (2) et qui présente une forme de S vers l'arrière avec des parties transversales d'appui (6, 7), les poignées présentant depuis leurs extrémités qui sont montées dans chacune des extrémités de la barre transversale des parties coudées horizontales (10, 11) qui présentent un rayon court disposant les parties avants (13, 14) dans le sens longitudinal et vers l'avant, les parties avant (13, 14) étant coudees selon un rayon vers le bas, caractérisé par le fait que les parties avant (13, 14) des poignées (8, 9) sont disposées en liqne par rapport à l'extrémité de la potence (2) sur laquelle est montée la barre transversale (1), et par le fait que les parties transversales d'appui (6, 7) qui sont disposées en arrière par rapport à l'extrémité de la potence (2) sont droites et parrallèles par repport à la ligne constituée par la potence (2) et les parties avant (13, 14) des poignées (8, 9).

2. Guidon de vélo selon la revendication 1, caractérisé par le fait que l'extrémité inférieure de chacune des poignées comporte une partie coudée inférieure qui constitue une butée empêchant les mains de glisser hors du guidon.

3. Guidon de vélo selon la revendication 1, caractérisé par le fait que les poignées sont montées à chaque extrémité de la barre par surmoulage.

4. Guidon de vélo selon la revendication 1, caractérisé par le fait que la barre transversale est réalisée en aluminium.

5. Guidon de vélo selon la revendication 1, caractérisé par le fait que les poignées sont réalisées en matière composite moulée.

## Claims

1. Bicycle handlebars with composite elements comprising handles (8, 9) which are mounted at the ends of a transverse bar (1) mounted at the end of a stem (2) and which exhibits an S-shape towards the rear with transverse supporting parts (6, 7), said handles presenting at their ends, which are mounted in each of the ends of the transverse bar, horizontal bent parts (10, 11) with a short radius orienting the front parts (13, 14) in the longitudinal direction and towards the front, said front parts (13, 14) being bent downwards according to a radius, characterised in that the front parts (13, 14) of the handles (8, 9) are arranged in a line relative to the end of the stem (2) on which is mounted the transverse bar (1), and in that the transverse support parts (6, 7), which are arranged at the rear relative to the end of the stem (2), are straight and parallel relative to the line constituted by the stem (2) and the front parts (13, 14) of the handles (8, 9).

2. Bicycle handlebars as claimed in Claim 1, characterised in that the lower end of each of the handles comprises a lower bent part which constitutes a stop preventing the hands from sliding off the handlebars.

3. Bicycle handlebars as claimed in Claim 1, characterised in that the handles are mounted on each end of the bar by moulding.

4. Bicycle handlebars as claimed in Claim 1, characterised in that the transverse bar is manufactured from aluminium.

5. Bicycle handlebars as claimed in Claim 1, characterised in that the handles are manufactured from a moulded composite material.

## Patentansprüche

1. Fahrradlenkstange mit Elementen aus Verbundwerkstoff bestehend aus Griffen (8, 9), die endseitig an eine an das Ende eines Lenkervorbaus (2) angebrachte Querstange (1) montiert sind, wobei die Querstange nach hinten zu eine S-Form mit querverlaufenden Stützteilen (6, 7) aufweist, wobei die Griffe von ihren in jedes Ende der Querstange eingesetzten Enden aus horizontale gebogene Teile (10, 11) mit einem kurzen Radius aufweisen, deren Vorderteile (13, 14) in Längsrichtung und nach vorne hin angeordnet sind, wobei diese Vorderteile (13, 14) nach einem nach unten weisenden Radius nach unten gebogen sind, dadurch gekennzeichnet, dass die Vorderteile (13, 14) der Griffe (8, 9) fluchtend mit dem Ende des Lenkervorbaus (2), auf dem die Querstange (1) montiert ist, angeordnet sind, und dass die hinter dem Ende des Lenkervorbaus (2) angeordneten querverlaufenden Stützteile (6, 7) gerade ausgebildet sind und parallel zur der Linie verlaufen, die durch den Lenkervorbau (2) und die Vorderteile (13, 14) der Griffe (8, 9) gebildet wird.

2. Fahrradlenkstange nach Anspruch 1, dadurch gekennzeichnet, dass das untere Ende eines jeden Griffes einen unteren gebogenen, einen Anschlag bildenden Teil aufweist, der das Abgleiten der Hände von der Lenkstange verhindert.

3. Fahrradlenkstange nach Anspruch 1, dadurch gekennzeichnet, dass die Griffe durch Umspritzen an das jeweilige Ende der Stange angebracht sind.

4. Fahrradlenkstange nach Anspruch 1, dadurch gekennzeichnet, dass die Querstange aus Aluminium hergestellt ist.

5. Fahrradlenkstange nach Anspruch 1, dadurch gekennzeichnet, dass die Griffe aus geformtem Verbundwerkstoff hergestellt sind.
